# EUROPEAN PATENT APPLICATION

(11) **EP 2 337 383 A1**
(43) Date of publication of application: **22.06.2011**
(21) Application number: 09793984.7
(22) Date of filing: 09.07.2009
(51) Int. Cl.: H04W 4/20, H04W 76/02, H04L 12/24

(54) **SYSTEM FOR DISTRIBUTING BROADBAND WIRELESS SIGNALS INDOORS**

(30) Priority: 09.07.2008 ES 200802049
(71) Applicant: Telefónica, S.A., 28013 Madrid (ES)
(72) Inventor: CUCALA GARCIA, Luis, E-28013 Madrid (ES); DAVILA ALVAREZ, Pablo, E-28013 Madrid (ES)
(74) Representative: Carpintero Lopez, Francisco
(86) International application number: PCT/ES2009/070280
(87) International publication number: WO 2010/004077

(57) **Abstract**

System for distributing broadband wireless signals indoors (100) comprising: a radio access node, connected to a telecommunication access network (170) via an access interface, where said radio access node comprises a broadband-signal-transmitting/-receiving module configured to transmit and receive broadband wireless signals via a broadband radio interface; at least one client device comprising a broadband-signal-transmitting/-receiving module configured to transmit and receive broadband wireless signals to/from said radio access node via said broadband radio interface. It also comprises a control channel configured to exchange control signals between said radio access node and said at least one client device over a control radio interface (161, 261, 361; 460, 560, 660), each of said radio access nodes and at least one client device comprising a control-signal-transmitting/-receiving module configured to establish said control channel for transmitting and receiving wireless signals over said control radio interface. The invention also relates to a method used to configure a wireless network formed by a plurality of nodes.

## Description

### FIELD OF THE INVENTION

The present invention is applied to the field of telecommunications and, more specifically, to the construction and roll-out of communications networks inside buildings and their connection with other telecommunications networks.

### BACKGROUND OF THE INVENTION

The technique conventionally used to provide radio interfaces inside buildings consists of the installation of as many devices and interfaces as are necessary. These devices must be configured by the user and cannot be updated to changes in the communications standard they use. Furthermore, these devices do not guarantee coverage in any enclosure and cannot be remotely supervised and controlled from the operator's network, so that they require local configuration thereof by the user.

Some examples of devices which have said drawbacks are:
- A device which permits access to the telecommunications network by copper pair and ADSL interface, and that inside the home supports the IEEE 802.11 x (WiFi)-type wireless network, a wireless network which must be configured by the user and cannot be supervised by the telecommunications operator.
- An IP television set-top-box (IPTV) that offers DVB-IP-type signals to a television set and which is connected by cable to an ADSL router which enables communicating with the telecommunications network.
- A system for distributing wireless signals in the home based on IEEE 802.11 x (WiFi) routers, which must be configured locally by the user and which cannot be remotely supervised from the telecommunications operator's network.

With current technology, these devices and these roll-out techniques suffer from limitations that are described below:
- It is not possible to guarantee radio coverage in all enclosures.
- It is necessary for the user to manually configure the devices.
- It is not possible to guarantee the remote supervision of all devices from the telecommunications operator's network.
- It is not possible to guarantee the quality of the service offered.
- It is necessary to have the existence of as many devices as communications interfaces one wants to have, with the subsequent accumulation of devices and costs increase.
- The devices are specific for each radio standard and cannot be updated, so that in the event of improvements in the standard or the appearance of new standards, it is necessary to discard the devices and acquire new ones.
- In some cases, the service provision requires the use of a wired connection.

On the other hand, in other fields of wireless communications, such as GSM/GPRS/UMTS-based mobile communications, a control channel included in the same radio interface is used to perform certain control and supervision operations. Due to the fact that the spectrum is limited, there is no dedicated air interface, but a control channel included in the same radio interface that is controlled or supervised is used. The collection of related maintenance data, for example, with the quality of the radio links (localization, signal level received, error transmission rate, etc.) is regulated by specific protocols within the specific GSM/GPRS/UMTS, etc. standards. For example, European patent application EP1619911 discloses a method for the compilation and transmission of maintenance information in mobile communications networks wherein, once said information is taken locally in a mobile terminal, this information is transmitted to a remote server in charge of its processing, analysis and, if necessary, correction of any transmission parameter, depending on those data processed.

Nevertheless, this exchange of control information between a mobile terminal and a remote server is made via a logic control channel included in the same radio interface. This entails that, in the event that said radio link should crash for any reason (lack of coverage, overloading, etc.), the exchange of supervision information is also interrupted.

### SUMMARY OF THE INVENTION

The present invention has the object of resolving the aforementioned problems by a system for distributing radio signals indoors, guaranteeing the remote coverage, supervision and configuration of all equipment used and ensuring service quality, also allowing updates to new standards without the need for changes of equipment.

One of the aspects of the present invention relates to a system for distributing broadband wireless signals indoors which comprises: a radio access node, connected to a telecommunication access network via an access interface, where this radio access node comprises a broadband-signal-transmitting/-receiving module configured to transmit and receive broadband wireless signals via a broadband radio interface; and at least one client device which comprises a broadband-signal-transmitting/-receiving module configured to transmit and receive broadband wireless signals to/from said radio access node via said broadband radio interface. The system also comprised a control channel configured to exchange control signals between said radio access node and said at least one client device over a control radio interface, each of said radio access nodes and at least one client device comprising a control-signal-transmitting/-receiving module configured to establish said control channel for transmitting and receiving wireless signals over said control radio interface.

In a possible embodiment, the system further comprises: at least one radio router device which comprises a broadband-signal-transmitting/-receiving module configured for the transmission/reception of broadband wireless signals and a control-signal-transmitting/-receiving module configured to transmit and receive wireless signals of a control radio interface; and at least one second client device which comprises a broadband-signal-transmitting/-receiving module and a control-signal-transmitting/-receiving module; where the radio router device is configured to receive radiofrequency signals from the radio access node via a broadband radio interface, to regenerate said signals and to relay them towards said second client device via a broadband radio interface, and vice versa and where the control channel is configured to exchange control signals between the radio router device and the radio access node and between the radio router device and said second client device over said control radio interface.

Preferably, at least one client device is connected to a final device via a final device interface, that client device being configured to provide the final device with at least one communications service through the final device interface. Alternatively, at least one client device comprises a module configured to perform final device functions, where that client device is configured to provide the module with least one communications service via an internal final device interface.

Preferably, the control channel is configured so that a telecommunications operator can communicate with any of the system devices and with any final or sensor or actuator device connected to those system devices, via an access interface connected to a telecommunication access network termination to perform remote tasks of configuration, operation, maintenance, supervision and management of said devices, irrespective of the status of the corresponding broadband radio interfaces. More preferably, at least one of those radio access nodes, client devices, radio router devices and of said sensor or actuator devices outside said system, is configured to implement radio functionalities that can be updated by software in a distributed environment, it being possible to individually update their functionalities by changes in its software which make it possible to giving support to new standards or variations thereof, and said control channel is configured to support said software uploads to update the devices.

In a particular embodiment, the control radio interface is more robust than the broadband radio interface, using coding techniques to increase redundancy of the signal and resistance to errors, it implements spectrum management techniques, it implements signal relaying techniques and it uses time-interleaved information techniques.

In a particular embodiment, the implementation of the control radio interface is based on the physical layer of standard IEEE 802.15.4. This physical layer of standard IEEE 802.15.4 is modified by the application of the following techniques: coding, spectrum management, signal relaying and time-interleaved information.

Preferably, at least one of the devices that form the system is configured to perform cognitive radio functions to analyse the degree of occupation of the spectrum and determine the most suitable frequency band and communications standard to support said broadband radio interface.

Also preferably, at least one of the radio access nodes, client devices and/or radio router devices comprises a base unit and a plurality of insertable modules inserted in the base unit.

Another aspect of the present invention offers a method to configure a wireless network formed by a plurality of nodes located inside a building, where a new node is going to be connected to said wireless network, which comprises the stages of: sending from the incoming node a message broadcast to the nodes that form the wireless network; sending a reply message to the incoming node from all the nodes of the wireless network which have received said broadcast message; performing, using the incoming node, an analysis of the replies received from the nodes which have received the broadcast message and calculating, from at least one parameter, to which of these nodes the incoming node should be connected; sending from that incoming node a connection request to the chosen node; sending, from that chosen node, a reply message to the incoming node, accepting the connection of the incoming node; notifying, via the chosen node whereto the incoming node has been connected, to the node of superior hierarchy whereto said chosen node is connected, if any, the new topology of the wireless network.

Preferably, the incoming node is a client device or a radio router device. If the incoming node (1112) is a client device (110, 111, 410, said chosen node is either a radio router device or a radio access node, and if said incoming node is a radio router device, said chosen node is either another radio router device or a radio access node.

Preferably, the analysis and calculation of the node whereto the incoming node is connected is made from a weighted function which calculates an optimum channel. In turn, this weighted function bears in mind the quality of the radio link and the distance in levels to the radio access node.

### BRIEF DESCRIPTION OF THE FIGURES

In order to aid towards a better understanding of the characteristics of the invention in accordance with a preferred example of practical embodiment thereof and to complement this description, a set of drawings is attached as an integral part thereof, whose character is illustrative and non-limiting. In these drawings:
Figure 1 shows a diagram of the system for distributing signals according to an embodiment of the present invention.
Figure 2 shows a diagram of the radio access node or point according to an embodiment of the present invention.
Figure 3 shows an alternative diagram of the radio access node or point according to an embodiment of the present invention.
Figure 4 shows a diagram of the client or intermediate device according to an embodiment of the present invention.
Figure 5 shows an alternative diagram of the client or intermediate device according to an embodiment of the present invention.
Figure 6 shows an alternative diagram of the client or intermediate device according to an embodiment of the present invention.
Figure 7 shows a diagram of the radio router device according to an embodiment of the present invention.
Figure 8 shows an alternative diagram of the radio router device according to an embodiment of the present invention.
Figure 9 shows a diagram of the implementation of the control radio interface according to the invention.
Figure 10 shows the establishment of a control channel according to an embodiment of the invention.

### DETAILED DESCRIPTION OF THE INVENTION

Throughout this specification, the term "comprises" and its derivatives must not be interpreted in an excluding or limiting sense, i.e. it should not be interpreted in the sense of excluding the possibility that the element or concept referred to includes additional elements or stages.

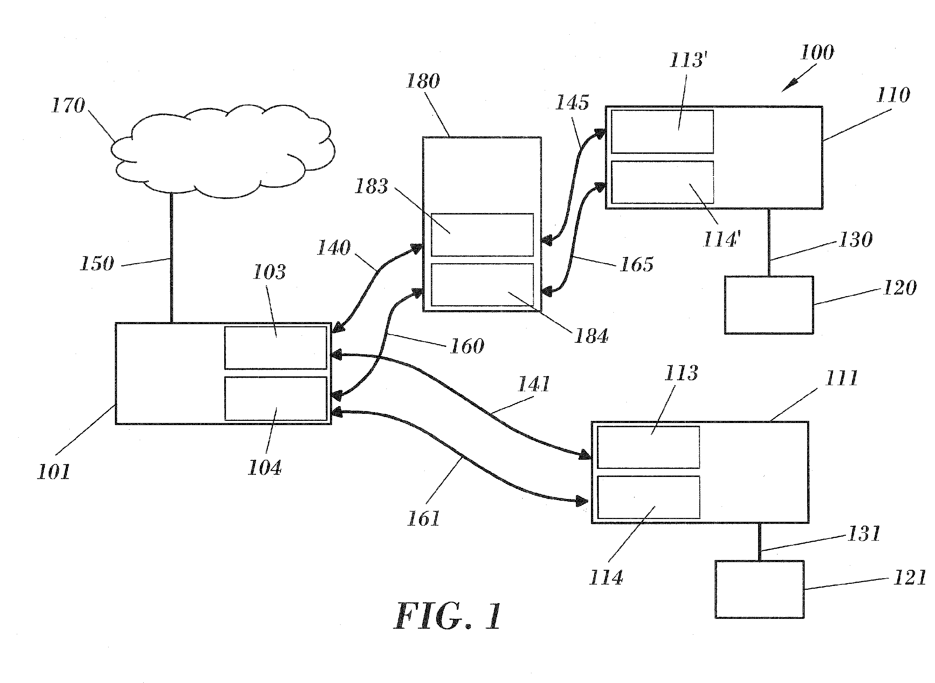

Figure 1 illustrates a diagram of a possible embodiment of the system for distributing broadband wireless signals 100 of the invention. The system 100 is especially designed to be used inside buildings and to support multiple radio communication interfaces inside a building. The system 100 comprises the following elements:

A radio access point or node, also called radio gateway 101. In this radio access node 101 reside the rerouting functions between the radio interfaces within a building and of gateway between the wireless network inside the building and an access network (generally a fixed network, for example copper pair or fibre optic to the home), in addition to the management functions of the wireless network in the building. The radio access node 101 comprises a broadband-radio-transmitting/- receiving module 103 and a control-radio-transmitting/-receiving module 104.

The system 100 also comprises one or several client or intermediate devices 110 111. Each client or intermediate device 111 110 comprises a broadband-radio-transmitting/-receiving module 113 113' and a control-radio-transmitting/-receiving module 114 114'.

The client or intermediate devices 110 111 are designed to provide a respective final device 120 121 with a final device interface 130 131, in order that this final device 120 121 can support the provision of a determined service. These final devices 120 121 are, for example, the user's electronic consumption devices. By way of example, in no case limitative, these final devices 120 121 may be a television set, a set-top box a multimedia hard disk or a DVD-type player.

Also by way of example, and without excluding other embodiments, the final device interface 130 131 may be an Ethernet interface, a HDMI interface, a USB interface, etc.

Optionally, if necessary to guarantee radio coverage, the system 100 also comprises one or several radio router devices 180, which are used to extend the radio coverage offered by a radio access point or node 101. These radio router devices 180 are capable of capturing the radio signals, regenerating them and relaying them in the most suitable frequency band and radio standard. For this, each radio router device 180 comprises a broadband-radio-transmitting/-receiving module 183 and a control-radio-transmitting/-receiving module 184. The radio router devices 180 are described below.

The radio access point or node or radio gateway 101 communicates with the client or intermediate devices 110 111 and, optionally, with the one or more radio router devices 180, by means of one or several broadband radio interfaces 140 141. Some examples of these interfaces, although without excluding the possibility of use of other types, are: IEEE 802.11 type interfaces (Wi-Fi), in 2.4 and 5 GHz bands; IEEE 802.16-type interfaces (WiMax); mobile phone interfaces such as those standardized by 3GPP (UMTS); Ultra Wide Band-type radio interfaces; and non-standardized interfaces in other frequency bands, such as 60 GHz.

These broadband radio interfaces 140 141 are used for the distribution of signals and their associated services inside the building.

On the other hand, the radio access point or node, rerouting gateway or node 101 communicates with the telecommunications operator's network by means of an access interface 150, that can be supported by wired or wireless means, such as twisted pair cabling, optic fibre cable or radio connection. This radio access node 101 is positioned in the place inside the building where the termination of the telecommunication access network 170 is available, for example, the point where the copper pair or the fibre optic is available.

The radio access node or point 101 communicates wirelessly with the client or intermediate devices 110 111 and with radio router devices 180 by means of broadband radio interfaces 140 141 which support telecommunications services.

The system 100 has a specific radio interface dedicated to the supervision and configuration of all system devices. This specific interface is designed so that there is greater radio coverage and it is more resistant to transmission interference and errors than any of the other interfaces used in the system. This specific radio interface guarantees the remote supervision and configuration of the system from the telecommunications operator's network 170 in any reasonable situation.

This specific radio interface, called control radio interface 160 161, enables the implementation of a specific communications channel independent from the radio interfaces used for support services. This specific communications channel is called control channel and is used for the control, configuration and supervision of all the devices installed in the building. The control channel is managed from the radio access point or node 101, so that from the latter it is possible to control the client or intermediate devices 110 111 and the radio router devices 180, if any exist.

Thanks to the existence of the control channel and whereto the radio access node or point 101 is connected to the access interface 150, the telecommunications operator can remotely control and supervise the operation of the wireless network in the client's installations, supported by the client or intermediate devices 110 111 and the radio router devices 180, irrespective of the status of the corresponding broadband radio interfaces 140 141 used to support the services.

The radio access point or node or radio gateway 101 performs the following functions: transmission and reception functions (Tx/Rx) associated to the broadband radio interfaces 140 141, such as detection and regeneration functions of the radio signals from the broadband radio interface 140 141 and signal transmission functions to the broadband radio interface 140 141, using at each point the most suitable frequency band and standard; transmission and reception functions (Tx/Rx) associated to a control radio interface 160 161, which is described in detail below; signal routing functions between the different broadband radio interfaces 140 141 available in the device; gateway functions between the access interface 150 with the operator's network (access network 170) and the different broadband radio interfaces 140 141 available in the device; cognitive radio functions, by the measurement of the degree of occupation of different spectrum bands; configuration functions of the devices that form the system 100, supported by a control channel described below; and identification functions, whereby the radio access point or node or radio gateway 101 informs the telecommunications operator, through the access network 170, of its characteristics, system devices that are connected to it, radio technologies and the frequency bands used and the degree of occupation of the spectrum.

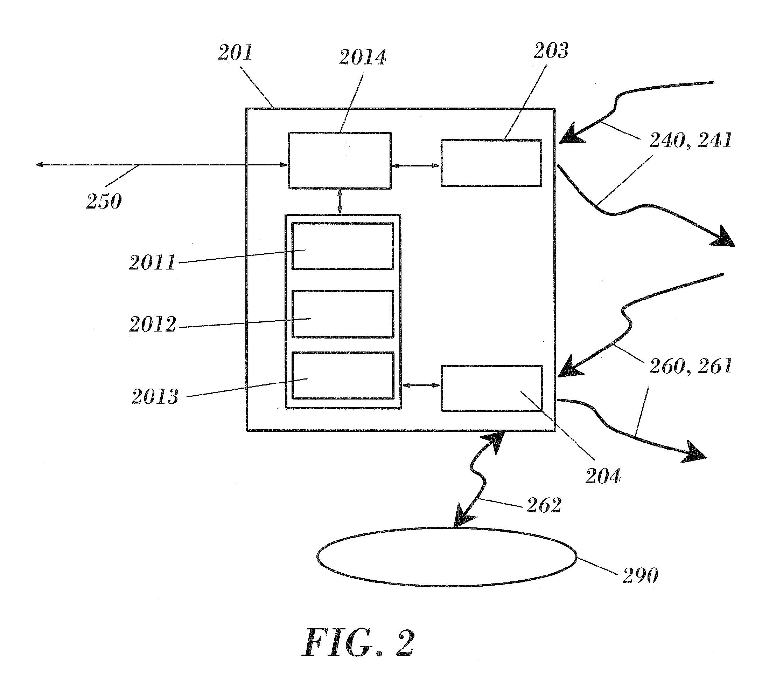

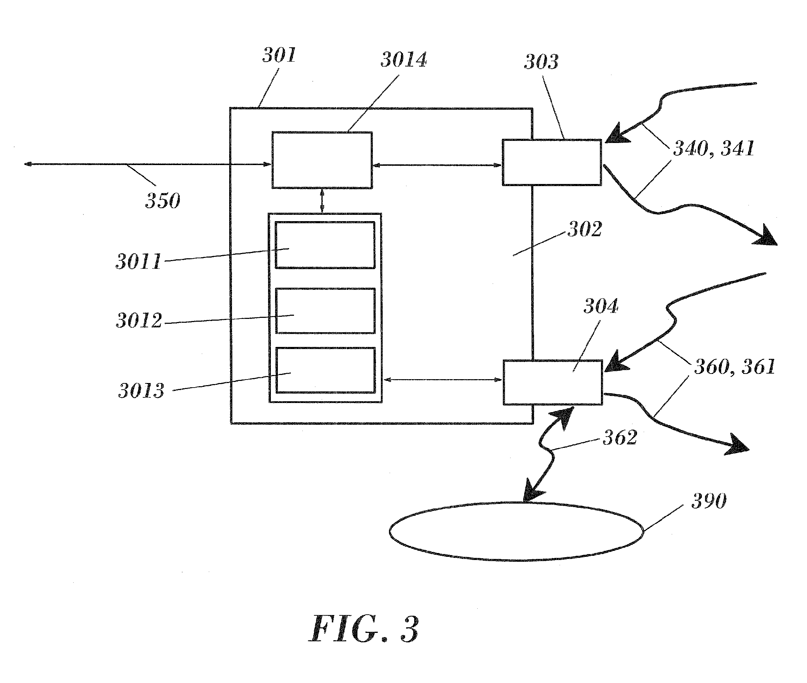

Figures 2 and 3 illustrate different possible implementations of the radio access point or node or radio gateway 201 301. As shown by figures 2 and 3, the radio access node 201 301 comprises: a configuration block 2011 3011, in charge of configuring the functionality of the radio access node 201 301, such as, for example, its IP address, the system devices that can be connected thereto or the services that may be offered; an identification block 2012 3012, in charge of storing information that enables it to identify all devices composing the system; and a cognitive radio block 2013 3013, in charge of analysing the electromagnetic spectrum and determining its degree of occupation, by means of measurements of radio-frequency power detected in each band. These modules are accessed via a gateway 2014 3014 with the access network and routing 170. Figures 2 and 3 also show the broadband-radio-transmitting/-receiving modules 203 303 which give access to a broadband radio interface 240 241 340 341 and the control-radio-transmitting/- receiving modules 204 304 which give access to a control radio interface 260 261 360 361. As illustrated by figure 3, in its hardware aspects, the radio access node may be based on a base unit 302 where the typical functions associated to the device are performed and several insertable radio modules 303 304, which are inserted in the base unit 302 and implement the necessary radio interfaces to communicate the radio access node 301 with the other devices forming the system.

Going back to figure 1, each client or intermediate device 110 111 can incorporate some or all the functionalities of the final device 120 121 which it has connected, integrating both in a single device. A non-limiting example of this integration may be a television set (final device 120 121) which integrates all typical functions of the client or intermediate device which are described in this document.

The client or intermediate devices 110 111 communicate with the radio access node 101 by means of one or several broadband radio interfaces 140 141. Some examples of these interfaces, although without excluding the possibility of the use of other types, are: IEEE 802.11 type interfaces (Wi-Fi), in 2.4 and 5 GHz bands; IEEE 802.16-type interfaces (WiMax); mobile phone interfaces such as those standardized by 3GPP (UMTS); Ultra Wide Band-type radio interfaces; and non-standardized interfaces in other frequency bands, such as 60 GHz.

The client or intermediate device 110 111 perform the following functions:
- transmission and reception functions (Tx/Rx) associated to the broadband radio interfaces 140 141, such as:
   - detection and regeneration functions of the radio signals from the broadband radio interface and their delivery once processed to the final device 120 121 through the final device interface 130 131;
   - transmission functions to the broadband radio interface of the signals from the final device 130 131 and received through the final device interface 130 131, using for it the most suitable frequency band and radio technology depending on the degree of occupation of the radio spectrum and the necessary bandwidth. By way of example, the device may transmit signals by means of any standardized broadband radio technology by 3GPP (for example, 3GPP release 8 LTE) or IEEE (for example, IEEE 802.11N), or by means of any proprietary broadband radio technology. With regard to the frequency bands and to the radio channels within said bands that can be used, the possibility of using any licensed band or band of public use can be contemplated.

Transmission and reception functions (Tx/Rx) associated to a control radio interface 160 161;
- Communication functions with the final device 120 121 through the final device interface 130 131;
   - Possibly, the client device or node 110 111 may perform specific functions of a final device 120 121. By way of example, the client device or node 110 111 may include functions of digital television signal decoding, of DVB-T or DVB-IP-type, delivering the already decoded signals to the television set (final device 120 121) through the final device interface 130 131; optionally, the client device 110 111 may even perform all the specific functions of a final device, integrating both in a single device;
   - Cognitive radio functions, by the measurement of the degree of occupation of different bands of the spectrum;
   - Configuration functions of the device, supported by a control channel detailed below;
   - Identification functions, whereby the client device informs the radio access node 101 or the radio router device 180 on their characteristics, final devices 120 121 that are connected thereto, radio technologies and frequency bands used, and degree of occupation of the spectrum.

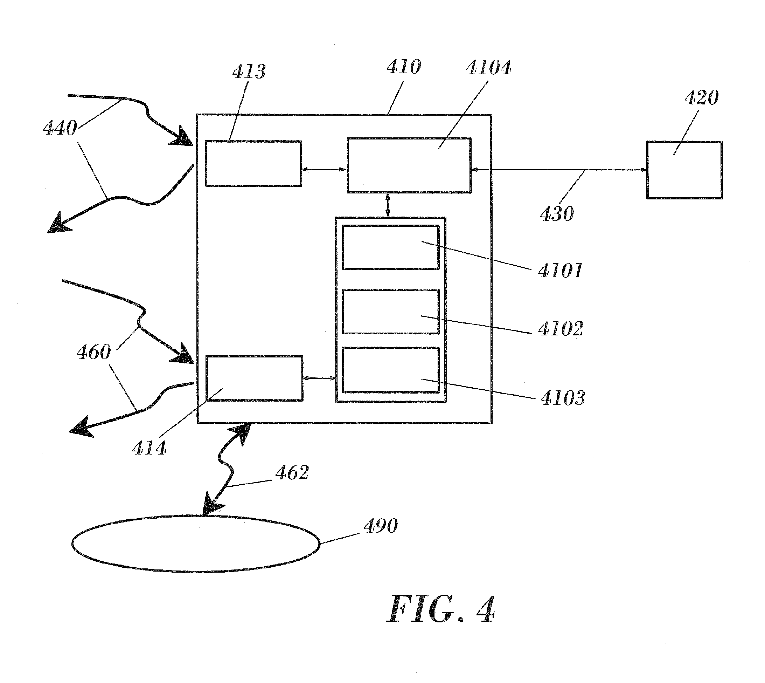

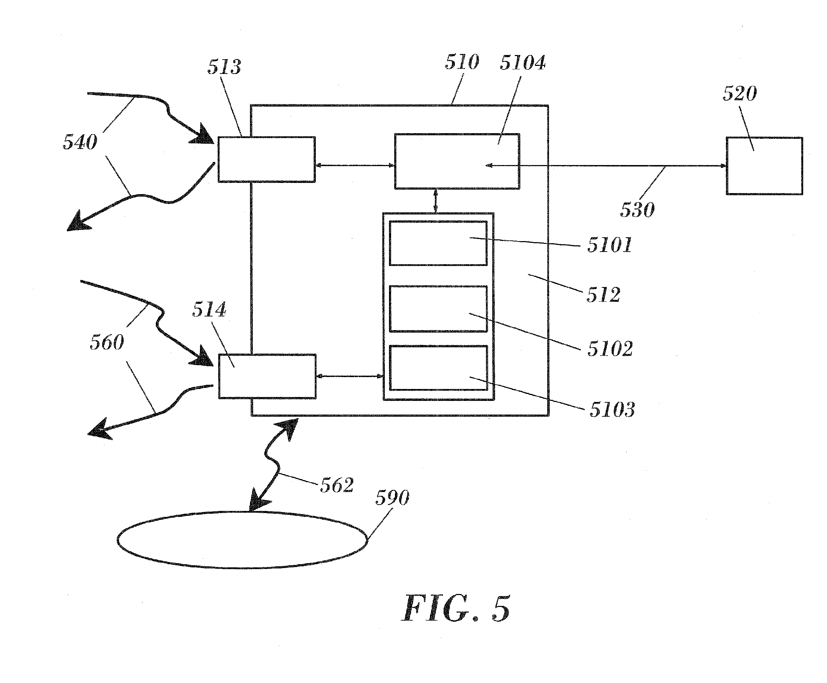

Figures 4 and 5 illustrate different possible implementations of the client device or node 410 510. As shown by figures 4 and 5, the device or node 410 510 comprises: a configuration block 4101 5101, in charge of configuring the functionality of the client device 410 510, such as, for example, its IP address, the system devices that can be connected thereto or the services that may be offered; an identification block 4102 5102, in charge of storing information that enables the device to identify itself and the final devices 120 121 connected thereto; and a cognitive radio block 4103 5103, in charge of analysing the electromagnetic spectrum and determining its degree of occupation, by means of measurements of radio-frequency power detected in each band. These modules are accessed via a module 4104 5104 which has the function of providing interface 430 530 with the final device 420 520 and, optionally, final device functions. Figures 4 and 5 also show the broadband-radio-transmitting/-receiving modules 413 513 which give access to a broadband radio interface 440 540 and the control-radio-transmitting/- receiving modules 414 514 which give access to a control radio interface 460 560. As figure 5 illustrates, in its hardware aspects, the client node or device 510 may be based on a base unit 512 where the typical functions associated to the device are performed and several insertable radio modules 513 514, which are inserted in the base unit 512 and implement the necessary radio interfaces (broadband radio interfaces 540 and control radio interfaces 560) to communicate the client node or device with the radio access node 101 or with a radio router device 180.

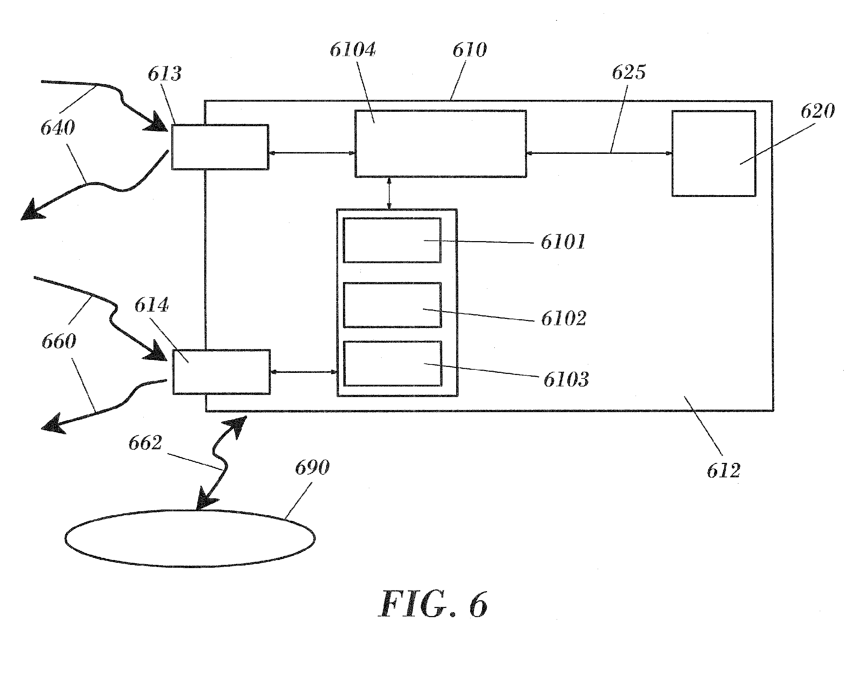

Figure 6 illustrates a possible implementation of a client device or node 610 based on a base unit 612, which comprises several insertable radio modules 613 614 (broadband-radio-transmitting/-receiving module 613 which gives access to a broadband radio interface 640 and control-radio-transmitting/-receiving module 614 which gives access to a control radio interface 660). As can be observed, it comprises modules similar to those described in relation to figures 4 and 5. Furthermore, the client node 610 integrates final device functions via a module 620 which may consist, by way of example, of a television set or multimedia hard disk. As regards the final device interface 625, it is to all intents and purposes identical to interface 430 530 of the respective figures 4 and 5. This final device interface 430 530 625 may be, illustratively and non-limitatively, a HDMI, Ethernet, USB-type interface or any other type.

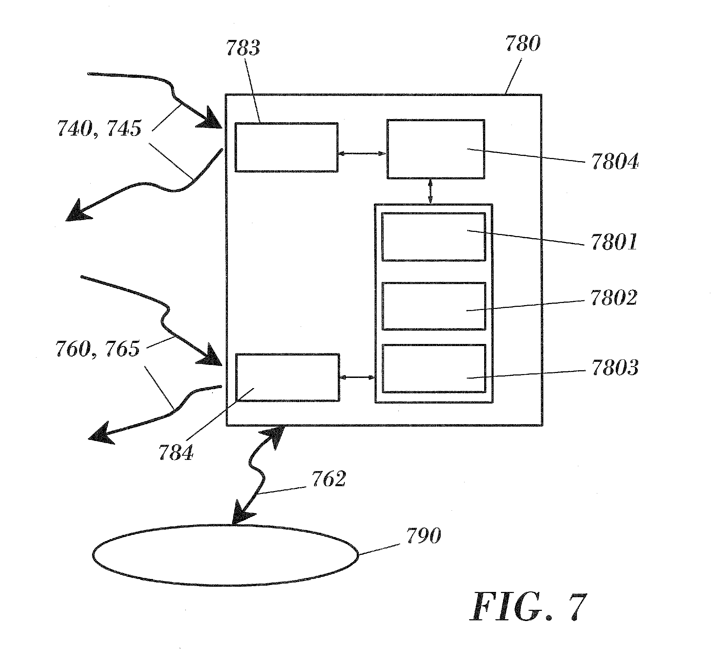

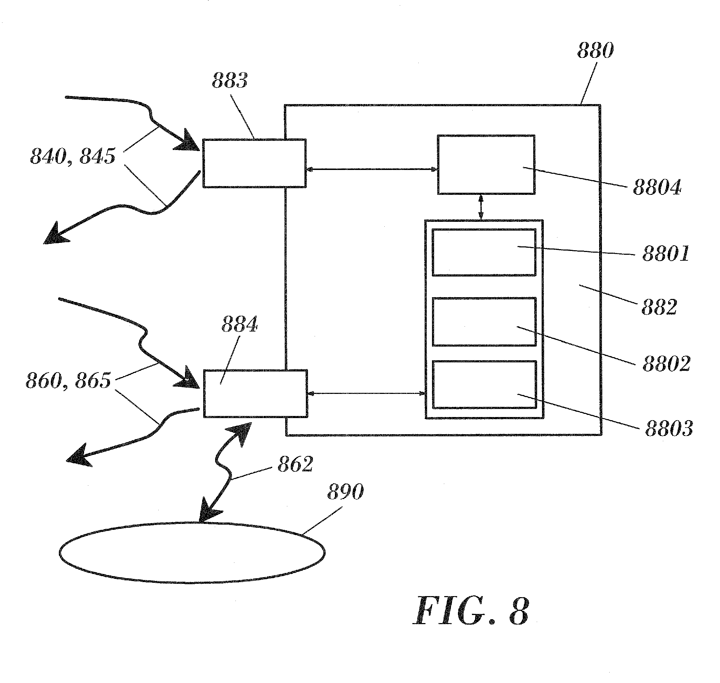

Figures 7 and 8 illustrate different possible implementations of the radio router device 780 880, which is used to extend the radio coverage offered by a radio access point or node 101. As shown by the figures, the radio router devices 780 880 receive broadband radio interfaces 740 745 840 845 from the radio access point or node 101 201 301, from one or several client or intermediate devices 110 111 410 510 610 and/or from other radio router devices 180 780 880. These radio router devices 780 880 also receive control radio interfaces 760 765 860 865 from the same devices. Figures 7 and 8 also show the broadband-radio-transmitting/- receiving modules 783 883 which give access to the corresponding interfaces and the control-radio-transmitting/-receiving modules 784 884 which give access to the control interfaces.

The radio router device 780 880 takes the signals received from the broadband radio interfaces 740 745 840 845, reconditions and relays them, using the most suitable frequency band and radio standard, depending on the radio interfaces available in the radio access point or node 101 201 301 and in the client or intermediate devices 110 111 410 510 610 and of the degree of use and interference of the radio spectrum.

The radio router device 780 880 performs the following functions:
- Reception and transmission functions (Tx/Rx) associated to the broadband radio interfaces 740 745 840 845:
   - detection and regeneration functions of the radio signals from the broadband radio interface 740 745 840 845;
   - relaying functions to the broadband radio interface 740 745 840 845 of the radio signals from the broadband radio interface detected, once regenerated, using for it the most suitable frequency band and radio technology depending on the degree of occupation of the radio spectrum and on the necessary bandwidth.

- Transmission and reception functions (Tx/Rx) associated to the control radio interfaces 760 765 860 865.
- Routing functions, so that a radio signal received by a broadband radio interface 740 840 may be retransmitted to another broadband radio interface 745 845 using a new radio technology and a new frequency band.
- Cognitive radio functions, by the measurement of the degree of occupation of different bands of the spectrum.
- Configuration functions of the device, supported by a control channel detailed below.
- Identification functions, whereby the radio router device 780 880 informs the radio access point or node 101 201 301 of its characteristics, system devices that are connected thereto, radio technologies and frequency bands used and degree of occupation of the spectrum.

The radio router device 180 780 880 communicates with the radio access point or node 101 201 301 and with the client or intermediate devices 110 111 410 510 610 by means of one or several broadband radio interfaces. Some examples of these interfaces, although without excluding the possibility of use of other types, are: IEEE 802.11 type interfaces (Wi-Fi), in 2.4 and 5 GHz bands; IEEE 802.16-type interfaces (WiMax); mobile phone interfaces such as those standardized by 3GPP (UMTS); Ultra Wide Band-type radio interfaces; and non-standardized interfaces in other frequency bands, such as 60 GHz.

As illustrated by figures 7 and 8, in its hardware aspects, the radio router device 780 comprises: a configuration block 7801 8801, in charge of configuring the functionality of the router device 780 880, such as, for example, its IP address, the system devices that can be connected thereto or the services that may be offered; an identification block 7802 8802, in charge of storing information which enables the radio router device 780 880 to identify itself and the final devices 120 121 and/or one or more other router devices 180 780 880 connected thereto; and a cognitive radio block 7803 8803, in charge of analysing the electromagnetic spectrum and determining its degree of occupation, by means of measurements of radio-frequency power detected in each band. Furthermore, the radio router devices 780 880 comprise routing modules 7804 8804 which give access to the previous modules.

Alternatively, as shown in figure 8, the radio router device 880 may be based on a base unit 882 where the typical functions associated to the router device are performed and several insertable radio modules 883 884, which are inserted in the base unit 882 and implement the necessary radio interfaces 840 845 860 865 to communicate the radio router device 780 with the radio access point or node 101 201 301, with a client or intermediate device 110 111 410 510 610 or with another radio router device 780 880. The insertable modules implement interfaces of wireless-type communications.

As has been described, both the radio access point or node 101 201 301, and the client or intermediate devices 110 111 410 510 610 or the radio router devices 180 780 880 may incorporate insertable modules, preferably of small size, that implement radio interfaces, so that they can be easily updated.

Furthermore, both the radio access point or node 101 201 301, and the client or intermediate devices 110 111 410 510 610 or the radio router devices 180 780 880 may be updated by updating software resident in any of the modules that form it, so that they may work with new versions of a radio communications interface or with new standards. In other words, the devices implement *Software Defined Radio* (SDR). Furthermore, the concept of software defined radio is expanded in a distributed environment, where each of the insertable modules 303 304 513 514 613 614 883 884 or the base units 301 510 610 880 have the capacity of updating their functionalities by changes in their software which make it possible to give support to new standards or variations thereof.

Furthermore, all system devices 100 implement cognitive radio, so that it analyses the status of the radio spectrum and selects at each time the most suitable frequency band and standard. Illustratively, although without being restricted to other embodiments, the functions of cognitive radio consists of a *Spectrum Sensing Cognitive Radio* and the measurement of the radio-frequency power detected in each frequency band of the unlicensed spectrum, which makes it possible to select for their use the least congested spectrum bands. In a possible embodiment, the implementation is based, without excluding other forms of alternative embodiment, on one or several low-noise amplifiers that detect the radio signals, which are converted to intermediate frequency by mixers and a tuneable local oscillator so that by tuning the frequency of the local oscillator it is possible to select different sections of the radiofrequency spectrum detected by the low-noise amplifiers. Subsequently, the signals in intermediate frequency are filtered by channel band pass filters. Once the signals in intermediate frequency have been filtered, their power is detected by conventional techniques.

Depending on each radio interface and on each frequency band, occupation levels of the radio channel are established heuristically, which enables that each of the devices that form the system may select the most suitable radio interface and frequency band.

As has been previously introduced, the system 100 implements a specific radio interface called control radio interface 160 161, which gives support to a control channel used for management tasks of the whole system 100. The control radio interface 160 161 is designed to maximize coverage and resistance to errors and propagation problems. This is achieved by a low net data transmission rate, using coding techniques to increase the redundancy of the signal and thereby resistance to errors. It also implements spectrum management techniques, using at each time the radio channel with least radio occupation and less interference. It also implements signal relaying techniques, including HARQ *(Hybrid Automatic Repeat-Request)* type, for the event that the reception errors are irrecoverable despite the coding techniques used. It also implements time-interleaved information techniques, to be able to support information retrieval in the event of bursts of signals with errors.

Control radio interface is understood to be the radio interface that serves to communicate pairs of system devices and that implement layers 1 and 2 of the OSI layer model, whilst control panel is understood to be a communications channel supported by the control radio interface that implements layer 3 and, where applicable, the higher layers of the OSI model.

As figure 1 illustrates, this control radio interface is implemented between all devices that form the system 100: between the radio access point or node 101 and the client or intermediate devices 111 (control radio interface 161), between the radio access point or node 101 and the radio router devices 180 (control radio interface 160) and between the radio router devices 180 and the client or intermediate devices 111 (control radio interface 165). Preferably, but not limitatively, this radio interface is based on a low transmission rate standard, of type IEEE 802.15.4.

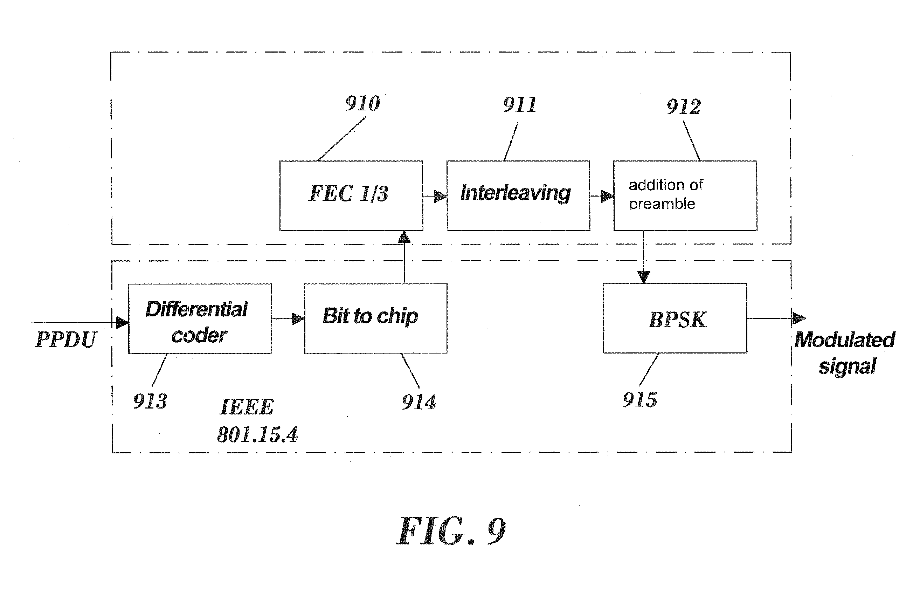

This control radio interface is based on the physical layer (PHY) and the medium access control layer (MAC) of the radio interface defined by EEE 802.15.4 version 2006. Other alternative implementations are also possible. The invention provides the following modifications to give the link the desired robustness with views to improving the coverage and resistance to interference:
- Exclusive use of binary phase shift keying modulations (BPSK), more robust than QPSK, both for emission in the 868 MHz band and 2450 MHz band (this latter case not contemplated in the standard).
- Use of forward error correction code (FEC) of block type or 1/3 rate convolutions, not included in the standard. As figure 9 indicates, the invention applies the forward error code 910 to the PPDU (PHY protocol data unit) packets after a bit-chip conversion block 914 (specified in clause "6.6.2.1 Reference modulator diagram" of document IEEE 802.15.4 Part 15.4: Wireless Medium Access Control (MAC) and Physical Layer (PHY) Specifications for Low-Rate Wireless Personal Area Networks (WPANs)).
- Implementation of the bit interleaving technique. As figure 9 indicates, this technique is implemented 911 after application of the error forward code 910, to avoid that bursts of errors due to signal fading cannot be corrected by the FEC code. The bits are introduced by rows in a matrix of n columns, and once the matrix is completed the order of the columns is permuted and the bits are extracted by columns.
- Creation of a new packet of higher level to the original PPDU, from the bits obtained after application of the FEC 910 code and the interleaving 911 to the original PPDU, by the addition of a preamble field 912 which enables the receiver to recognize the start of each packet. This is also illustrated in figure 9.
- Including, within the parameter relative to the information supported by the channel quality indicator (LQI, clause 6.9.8 Link quality indicator of the specification document stated above), the number of bits that have been corrected in reception by the FEC decoder, not contemplated in the standard.
- Implementation of the *Hybrid automatic repeat-request* (HARQ) technique, not contemplated in the radio interface standard IEEE 802.15.4, by performing identical relaying in the case of not received a packet received acknowledgement (ACK), and the combination in reception of several packets by the chase combining technique, where soft values (bits or symbols received together with an indication based on their proximity to the ideal decision point) are stored in the receiver buffer memory, and the soft values are combined to achieve the most probable logic value of the symbol or bit.

Thanks to this implementation provided by the invention, this interface enables the remote supervision and configuration of all devices that form the system 100 from the telecommunications operator's network 170, irrespective of the availability of the rest of the broadband radio interfaces implemented in the system 100, by means of the transmission of information on the quality of the services supported, the topology and configuration of the system 100, and the broadband radio interfaces 140 145 141 used and the frequency bands in use. In other words, this specific radio interface is designed so that it is available even when the broadband radio interfaces cannot support communication between the devices that form the system, so that it can guarantee the remote supervision of the system from the telecommunications operator's network.

In addition to give support to the control channel, the control radio interface may be used to communicate any of the devices that form the system 100 (radio access points or nodes 101, radio router devices 180 and client or intermediate devices 110 111) with devices that do not form part of said system 100. Specifically, the control radio interface is also used to communicate with sensor and actuator devices 290 390 490 590 690 790 890 that implement automated control or environmental intelligence applications in the building. These sensor and actuator devices are illustrated in figures 2 to 8, as well as the corresponding radio interfaces 262 363 462 562 662 762 862.

The control channel used in the system 100 has the following functions:
- Enabling the telecommunications operator to communicate with any of the devices that form the system 100 through the access network 170 that reaches the radio access point or node 101 and, from this node, communicate with the radio router devices 180, if any, and with the client or intermediate devices 110 111 through the control radio interface 160 161 165.
- Communicating the topology of the system 100 implemented in each building to the radio access point or node 101:
   - Number of radio router devices 180, if any, and their characteristics.
   - Number of client or intermediate devices 110 111 and their characteristics.
   - Broadband radio frequencies and interfaces 140 141 145 used in the system 100.
- Remotely configuring all devices that form the system 100 from the telecommunications operator's network, without the user having to configure anything locally (for example, in their home), by means of interaction of the configuration modules that form part of the devices 101 180 110 111 with the configuration applications resident in the telecommunications operator's network.
- Communicating to the radio access point or node 101 reports of measurements of occupation of the radio spectrum made by the system devices and reports on radio interfaces selected at each point, by means of the interaction of cognitive radio modules and configuration modules that form part of the devices 101 180 110 111 with the configuration applications resident in the telecommunications operator's network.
- Communicating to the radio access point or node 101 quality reports on the services provided to each final device 120 121, by means of the client or intermediate devices 110 111), via interaction of the configuration modules that form part of the devices 101 180 110 111 with the configuration applications resident in the telecommunications operator's network.
- Supporting the software uploads that enable updating the features of the radio router devices 180 and the client or intermediate devices 110 111), by means of the interaction of the configuration modules that form part of the devices 101 180 110 111 with the configuration applications resident in the telecommunications operator's network.
- Communicating with devices that do not form part of the system 100. Specifically, the control radio interface is also used to communicate with sensor and actuator devices, preferably wireless, also preferably of low transmission rate, which implement automated control or environmental intelligence applications in the building.

The specific characteristics of the control radio interface are: range of coverage equal to or greater than any of the broadband radio interfaces, using for it the lowest possible frequency band, starting from the free band of 2.4 GHz; low net data transmission rate, using coding techniques to increase the redundancy of the signal and with it resistance to errors, as has been previously explained; it selects, by conventional forms, at each time the radio channel with least radio occupation and less interference; as has already been explained, it implements signal relaying techniques, preferably of the HARQ type *(Hybrid Automatic Repeat-Request),* for the case that the errors in reception are irrecoverable despite the coding techniques used; it implements the aforementioned time-interleaved information techniques, to be able to support the retrieval of information in the event of bursts of signals with errors.

Although some of these techniques have been used in broadband radio systems, the invention is used in a low-rate channel (control channel) based on radio interface IEEE802.15.4.

The characteristics and operation of the control channel are explained below:

The control channel, supported throughout the sequence of radio access point or node 101, radio router devices 180 and client devices 110 111 has a topology in a dynamic and configurable tree without user intervention. In this tree topology, the radio access node or device 101 is the root node to which the other devices are connected. The devices routers 180, if any, are connected in successive levels (i.e. there may be several hierarchies of router devices 180), the client devices 110 111 at any level being connected in last instance. This topology has the specific characteristic of being automatically reconfigurable.

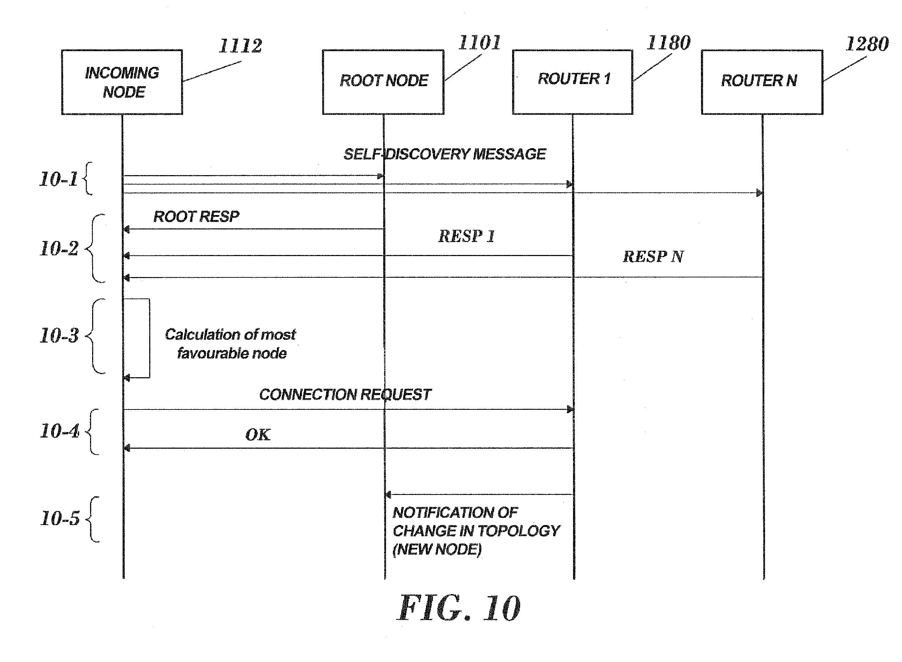

Figure 10 shows the establishment of the control channel when a new device forms part, for the first time, of the system 100. In the example illustrated in figure 10, incoming node 1112 is called the device introduced in the system for the first time. This incoming node 1112 may be either a client or intermediate device 110 111 such as a router device 180. In this example, root node 1101 is called the radio access point or node 101. Furthermore, this example illustratively shows two router devices 1180 1280, but the system may have a greater or lesser number thereof. As regards the hierarchy, the highest level device is the radio access point or node 101, followed by the one or more radio router devices 180, if any, and followed by the one or more client or intermediate devices 110 111, which are those of least level when the control channel is not used to control a final device 120 121. The control channel can also be used to control the final devices 120 121, which depend on a client or intermediate device 110 111 and which constitute the lower hierarchical level.

The radio access node 101 201 301 has a passive behaviour. In the case of crash and recovery, it simply remains waiting for incoming device requests. After a crash event of the root node or radio access node 101 201 301, the nodes connected in first level maintain the structure during a pre-established time, after which they send a "reset" message to their nodes connected in successive levels. As a consequence of the "reset" message, the other nodes connected reset the discovery process, which is launched when the root node or radio access node 101 201 301 becomes operative again through the radio channel. If the root node or radio access node 101 201 301 is recovered before this pre-established time, on receiving the messages from the first-level nodes, it performs a query process on all nodes to retrieve the information on the connected topology.

The control channel configuration process does not require user intervention, as it is limited to supply and switch on the devices starting from the radio access point or node 101, following the radio router devices 180 and finishing with the client or intermediate devices 110 111.

Once the new device 1112 (incoming node) has been introduced, a discovery and connection stage starts until finding the response of one or several higher level devices. This discovery stage, alluded to in 10 by reference 10-1, comprises the sending of an initial broadcast portion by the announcing device (incoming device 1112, in other words, device that wants to be connected to the domestic network for the first time). This broadcast portion is sent by each of the control channels. As new device or incoming node 1112 we can consider either a radio access point or node 101 201 301 and a radio router device 180 or a client device 110. Each broadcast portion emitted by an incoming device incorporates a unique identifier, so that the one or more router devices 180 780 880 or the radio access point or node 101 201 301 can address the response to a specific incoming element.

Next, all root devices (radio access point or node 101) and routers 180 which have received the message broadcast respond to the incoming node 1112. The client or intermediate devices 111 110 do not respond to the broadcast message. Note that it is possible that, mainly due to the geographic distance between the devices in the domestic network, not all devices receive the message broadcast 10-1. As figure 10 illustrates, the root node 1101 and two router nodes 1180 1280 respond to the incoming node 1112 acknowledging receipt of the broadcast message 10-1. The case may arise that, for example, the root node 1101, due to the distance with respect to the incoming node 1112, does not receive the message 10-1.

Then, in the event that during the discovery stage, the incoming node obtains a response from several devices, the incoming node 1112 analyses the content of the replies received 10-2 and makes a calculation of what is the most favourable node (route or router) to connect to. Most favourable node is understood to be that device of higher level which offers best conditions of a determined parameter or set of parameters. Examples of possible parameters that can be assessed are: the radio link of the control radio interface, a value of a weighted function that bears in mind the quality of the radio link and the distance in levels to the radio access point or node 101, etc. This is represented in figure 10 by reference 10-3. This calculation and selection stage is preferably based on a weighted function that provides the optimum channel. This calculation and selection stage of the weighted function is outside the scope of the present invention. Therefore, in the replies to the broadcast messages, the router nodes include the distance in levels with the root node and latency measurements. The channel occupation status information is directly obtained by the incoming node.

Once the most favourable node has been selected (which, by way of illustration, in figure 10 is the router node 1180), the incoming node 1112 sends it a connection request 10-4, which responds to the incoming node 1112 with an acceptance message.

Finally, the node 1180 whereto the incoming node 1112 is connected, notifies the node of superior hierarchy of the change in topology, i.e. of the incorporation of a new node 1180 in the system 100. Figure 100 shows, by way of illustration, that the node of superior hierarchy which informs the router device 1180 is the root node 1101 (radio access point or node), but in the event of a more hierarchized system, it could be another router node or device. Note that the system 100 may have several hierarchies of router devices 180. Note that the physical channels previously exist, thereby establishing the link between the incoming node and the node whereto it is connected (router node or radio access node).

The control channel may dynamically respond to events which affect the system 100 typology, and the degradation or improvement of the quality of the links of the control radio interface 160 161 165 and the appearance or disappearance of devices. Therefore, it previously surveys the quality of the different channels to decide whether to restart the discovery process. For example, when a new device appears (note that the new devices are wireless as regards their connection to the system 100) in the network, it performs the aforementioned discovery process and is subscribed to a higher level. When a device is disconnected, the disconnection is discovered by the subordinate devices if any, which perform a new discovery process until subscribing to a new higher level device. Note that disconnection is understood as the absence of response to the keep-alive messages. The subordinate devices detect the absence of response to the heartbeats, thus detecting the disconnection. The disconnection of a device is also discovered by the higher level devices: Periodically, the root node may also send echo messages that are responded to by their directly connected nodes and by the indirectly connected nodes (the echo messages are relayed to the lower levels).

All these variations in topology are notified and stored by the radio access point or node 101, that at all times has an updated model of said topology.

On the other hand, at any time the radio access point or node 101 may emit an order to all devices so that they restart the connection process, to form the optimum topology at that time. The modifications to the topology are notified to all devices in order to be able to reassess the device whereto it is connected. If a device does not respond to a higher level message, the device whereto it is connected stops responding to potential keep-alive messages, which ends up redounding in a resetting of the discovery process.

In light of the description and set of figures, the person skilled in the art may understand that the invention has been described according to some preferred embodiments thereof, but that multiple variations can be introduced in said preferred embodiments, without going outside the object of the invention as has been claimed.

## Claims

1. A system for distributing broadband wireless signals indoors (100) which comprises:
- a radio access node (101, 201, 301, 1101), connected to a telecommunication access network (170) via an access interface (150, 250, 350), where said radio access node (101, 201, 301) comprises a broadband-signal-transmitting/-receiving module (103, 203, 303) configured to transmit and receive broadband wireless signals via a broadband radio interface (140, 240, 340; 141, 241, 341)
- at least one client device (111, 410, 510, 610) which comprises a broadband-signal-transmitting/-receiving module (113, 413, 513, 613) configured to transmit and receive broadband wireless signals to/from said radio access node (101, 201, 301) via said broadband radio interface (141, 240, 340);
said system (100) further comprising a control channel configured to exchange control signals between said radio access node (101, 201, 301) and said at least one client device (111, 410, 510, 610) over a control radio interface (161, 261, 361; 460, 560, 660), each of said radio access nodes (101, 201, 301, 1101) and at least one client device (111, 410, 510, 610) comprising a control-signal-transmitting/- receiving module (104, 204, 304; 114, 414, 514, 614) configured to establish said control channel for transmitting and receiving wireless signals over said control radio interface (161, 261, 361; 460, 560, 660) where said control channel is configured so that a telecommunications operator can communicate with any of the system devices (100) and with any final or sensor or actuator device connected to said system devices (100), via an access interface (150) connected to a telecommunication access network termination (170) to perform remote tasks of configuration, operation, maintenance, supervision and management of said devices, irrespective of the status of the corresponding broadband radio interfaces.

2. The system (100) according to claim 1, which further comprises:
- at least one radio router device (180, 780, 880) which comprises a broadband-signal-transmitting/-receiving module (183, 783, 883) configured for the transmission/reception of broadband wireless signals and a control-signal-transmitting/-receiving module (184, 784, 884) configured to transmit and receive wireless signals of a control radio interface (160, 165, 760, 765, 860, 865);
- at least one second client device (110, 410, 510, 610) which comprises a broadband-signal-transmitting/-receiving module (113', 413, 513, 613) configured to transmit and receive broadband wireless signals and a control-signal-transmitting/- receiving module (114', 414, 514, 614) configured to transmit and receive wireless signals over said control radio interface (160, 165, 760, 765, 860, 865);
where said radio router device (180, 780, 880) is configured to receive radiofrequency signals from said radio access node (101, 201, 301, 1101) via a broadband radio interface (140, 240, 340), to regenerate said signals and to relay them towards said second client device (110, 410, 510, 610) via a broadband radio interface (145, 745, 845), and vice versa and where said control channel is configured to exchange control signals between said radio router device (180, 780, 880) and said radio access node (101, 201, 301) and between said radio router device (180, 780, 880) and said second client device (110, 410, 510, 610) over said control radio interface.

3. The system (100) according to any of the preceding claims, where at least one client device (110, 111, 410, 510, 610) is connected to a final device (120, 121, 420, 520, 620) via a final device interface (130, 131, 430, 530), said client device (110, 111, 410, 510, 610) being configured to provide said final device (120, 121, 420, 520, 620) with at least one communications service via said final device interface (130, 131, 430, 530).

4. The system (100) according to either of claims 1 or 2, where at least one client device (610) comprises a module (620) configured to perform final device functions, where said client device (610) is configured to provide said module (620) with at least one communications service via an internal final device interface (625).

5. The system (100) according to claim 1, where at least one of said radio access nodes (101, 202, 301), client devices (110, 111, 410, 510, 610), radio router devices (180, 780, 880) and of said sensor or actuator devices outside said system (100), is configured to implement radio functionalities that can be updated by software in a distributed environment, it being possible to individually update their functionalities by changes in its software which make it possible to give support to new standards or variations thereof, and said control channel is configured to support said software uploads to update the devices.

6. The system (100) according to any of the preceding claims, where said control radio interface (160, 161, 165, 261, 361; 460, 560, 660, 760, 765, 860, 865) is more robust than said broadband radio interface (140, 141, 240, 241, 340, 3410) and, more specifically, uses coding techniques to increase the redundancy of the signal and the resistance to errors, it implements spectrum management techniques, it implements signal relaying techniques and it uses time-interleaved information techniques.

7. The system (100) according to any of the preceding claims, where the implementation of said control radio interface (160, 161, 165, 261, 361; 460, 560, 660, 760, 765, 860, 865) is based on the physical layer of standard IEEE 802.15.4.

8. The system (100) according to claim 7, where said physical layer of standard IEEE 802.15.4 is modified by the application of the following techniques: coding, spectrum management, signal relaying and time-interleaved information.

9. System (100) according to any of the preceding claims, where at least one of the devices that form the system (100) is configured to perform cognitive radio functions to analyse the degree of occupation of the spectrum and determine the most suitable frequency band and communications standard to support said broadband radio interface (140, 141, 240, 241, 340, 3410).

10. The system (100) according to any of the preceding claims, where at least one of said radio access nodes (301), client devices (510) and/or radio router devices (880) comprises a base unit (302, 512, 882) and a plurality of insertable modules (303, 304; 513, 514; 883, 884) inserted in said base unit.

11. A method to configure a wireless network (100) formed by a plurality of nodes (101, 110, 111, 180; 1101, 1180, 1280) located inside a building, where a new node (1112) will be connected to said wireless network, which comprises the stages of:
- sending (10-1) from said incoming node (1112) a message broadcast to the nodes that form said wireless network (100);
- sending (10-2) a reply message to said incoming node (1112) from all the nodes (1101, 1180, 1280) of the wireless network (100) which have received said broadcast message;
- performing (10-3), by the incoming node (1112), an analysis of the replies received from the nodes (1101, 1180, 1280) which have received the broadcast message and calculating, from at least one parameter, to which of these nodes (1180) to connect the incoming node (1112);
- sending (10-4) from said incoming node (1112) a connection request to the chosen node (1180);
- sending, from said chosen node (1180), a reply message (OK) to said incoming node (1112), accepting the connection of the incoming node (1112);
- notifying (10-5), by the chosen node (1180) whereto the incoming node (1112) has been connected, to the node of superior hierarchy (1101) whereto is connected said chosen node (1180), if any, the new topology of the wireless network (100).

12. The method according to claim 11, where said incoming node (1112) is a client device (110, 111, 410, 510, 610) or a radio router device (180, 780, 880).

13. The method according to claim 12, where if said incoming node (1112) is a client device (110, 111, 410, said chosen node (1180) is either a radio router device (180, 780, 880) or a radio access node (101, 201, 301, 1101), and if said incoming node (1112) is a radio router device (180, 780, 880), said chosen node (1180) is either another radio router device (180, 780, 880) or a radio access node (101, 201, 301,1101).

14. The method according to any of claims 11 to 13, where said analysis (10-3) and calculation of the node (1180) whereto the incoming node (1112) is connected is performed from a weighted function which calculates an optimum channel.

15. The method according to claim 14, where said weighted function bears in mind the quality of the radio link and the distance in levels to the radio access node (101).
